# EUROPEAN PATENT APPLICATION

(11) **EP 4 561 020 A1**
(43) Date of publication of application: **28.05.2025**
(21) Application number: 23842318.0
(22) Date of filing: 18.07.2023
(51) Int. Cl.: H04L 67/12, H04W 4/40, H04W 12/041, H04L 9/08

(54) **VEHICLE COMMUNICATION METHOD, TERMINAL, VEHICLE AND COMPUTER-READABLE STORAGE MEDIUM**

(30) Priority: 22.07.2022 CN 202210864541
(71) Applicant: Nio Technology (Anhui) Co., Ltd, Hefei City, Anhui 230601 (CN)
(72) Inventor: LU, Long, Hefei, Anhui 230601 (CN); LI, Zhengyu, Hefei, Anhui 230601 (CN); SUN, Ying, Hefei, Anhui 230601 (CN)
(74) Representative: Vossius & Partner Patentanwälte Rechtsanwälte mbB
(86) International application number: PCT/CN2023/107941
(87) International publication number: WO 2024/017255

(57) **Abstract**

The disclosure relates to a vehicle communication method and terminal, a vehicle, and a computer-readable storage medium. The method includes the following steps performed by a vehicle end: generating a seed key and presenting a graphic code for the seed key, wherein information carried in the graphical code is encrypted with a password, and the graphic code is read by a mobile end in communication with the vehicle end; generating a session key using a key generation algorithm based on the seed key and session information generated by the vehicle end according to predetermined rule(s); encrypting session content by using the session key to generate encrypted session content; and sending the encrypted session content and the session information.

## Description

### Cross Reference to Related Application

The disclosure claims priority to Chinese Patent Application No. 202210864541.3 filed with July 22, 2022 and entitled "VEHICLE COMMUNICATION METHOD AND TERMINAL, VEHICLE, AND COMPUTER-READABLE STORAGE MEDIUM", which is incorporated herein by reference in its entirety.

### Technical Field

The disclosure relates to the field of vehicle privacy protection, and in particular, to a vehicle communication method and terminal, a vehicle, and a computer-readable storage medium.

### Background Art

With the development of intelligent connected vehicles, communication security is grabbing more and more attention from vehicle users. In the industry of intelligent electric vehicles, one of the most important areas of security is data security, which is related to user privacy, property and even life safety. With the increasing intelligence and connectivity of vehicles, the amount of data generated by smart vehicles is growing, and much of this data is related to user privacy. If such data were to be leaked, it could have a significant impact on the user privacy, property, and even the safety of users' lives. With the introduction of data security laws and personal information protection laws, user privacy protection has become a compliance requirement. In scenarios such as vehicle guard mode and vehicle-end calendar synchronization, a privacy protection scheme for offline scenarios that involves end-to-end encryption based on an authentication center system can both protect user privacy and meet compliance requirements.

In view of this, there is a need for an improved vehicle communication solution.

### Summary

Embodiments of the disclosure provide a vehicle communication method and terminal, a vehicle, and a computer-readable storage medium for improving the security of vehicle communication.

According to an aspect of the disclosure, a vehicle communication method is provided. The method includes the following steps performed by a vehicle end: generating a seed key and presenting a graphic code for the seed key, wherein information carried in the graphic code is encrypted with a password, and the graphic code is read by a mobile end in communication with the vehicle end; generating a session key using a key generation algorithm based on the seed key and session information generated by the vehicle end according to predetermined rule(s); encrypting session content by using the session key to generate encrypted session content; and sending the encrypted session content and the session information.

In some embodiments of the disclosure, the graphic code is a two-dimensional code.

In some embodiments of the disclosure, the information carried in the graphic code further includes a vehicle identification code of the vehicle end.

In some embodiments of the disclosure, the session information includes at least one of the following: timestamp(s) and random number(s).

In some embodiments of the disclosure, the session content includes at least one of the following: video data pushed to the mobile end and synchronized calendar data.

In some embodiments of the disclosure, the method further includes: receiving second encrypted session content and second session information from the mobile end, wherein the second session information is generated by the mobile end according to predetermined rule(s); generating a second session key based on the seed key and the second session information using a key generation algorithm; and decrypting the second encrypted session content by using the second session key to obtain second session content.

According to another aspect of the disclosure, a vehicle communication method is provided. The method includes the following steps performed by a mobile end: reading a graphic code presented by a vehicle end in communication with the mobile end; decrypting, by using a password, information carried in the graphic code to obtain a seed key; receiving encrypted session content and session information from the vehicle end, wherein the session information is generated by the vehicle end according to predetermined rule(s); generating a session key based on the seed key and the session information using a key generation algorithm; and decrypting the encrypted session content by using the session key to obtain session content.

In some embodiments of the disclosure, the method further includes: generating a second session key using a key generation algorithm based on the seed key and second session information generated according to predetermined rule(s); encrypting second session content by using the second session key to generate second encrypted session content; and sending the second encrypted session content and the second session information.

According to another aspect of the disclosure, a vehicle communication terminal is provided. The terminal includes: a key management and encryption/decryption module configured to generate a seed key; a verification module configured to present a graphic code for the seed key, wherein information carried in the graphic code is encrypted with a password, for reading by a mobile end in communication with a vehicle end; and a session management module configured to generate session information according to predetermined rule(s), wherein the key management and encryption/decryption module is further configured to generate a session key based on the seed key and the session information using a key generation algorithm, encrypt session content by the session key to generate encrypted session content, and send the encrypted session content and the session information.

In some embodiments of the disclosure, the graphic code is a two-dimensional code.

In some embodiments of the disclosure, the information carried in the graphic code further includes a vehicle identification code of the vehicle end.

In some embodiments of the disclosure, the session information includes at least one of the following: timestamp(s) and random number(s).

In some embodiments of the disclosure, the session content includes at least one of the following: video data pushed to the mobile end and synchronized calendar data.

In some embodiments of the disclosure, the key management and encryption/decryption module is further configured to: receive second encrypted session content and second session information from the mobile end, wherein the second session information is generated by the mobile end according to predetermined rule(s); generate a second session key based on the seed key and the second session information using a key generation algorithm; and decrypt the second encrypted session content by using the second session key to obtain second session content.

According to another aspect of the disclosure, a mobile end for vehicle communication is provided. The mobile end includes: a verification module configured to read a graphic code presented by a vehicle end in communication with the mobile end; a key management and encryption/decryption module configured to decrypt, by using a password, information carried in the graphic code to obtain a seed key; and a session management module configured to receive encrypted session content and session information from the vehicle end, wherein the key management and encryption/decryption module is further configured to generate a session key based on the seed key and the session information using a key generation algorithm, and decrypt the encrypted session content by using the session key to obtain session content.

In some embodiments of the disclosure, the key management and encryption/decryption module is further configured to: generate a second session key using a key generation algorithm based on the seed key and second session information generated according to predetermined rule(s); encrypt second session content by using the second session key to generate second encrypted session content; and send the second encrypted session content and the second session information.

According to another aspect of the disclosure, a vehicle communication terminal is provided. The terminal includes: a memory configured to store instructions; and a processor configured to execute the instructions to cause any one of the vehicle communication methods as described above to be performed.

According to another aspect of the disclosure, a vehicle is provided. The vehicle includes any one of the vehicle communication terminals as described above.

According to another aspect of the disclosure, there is provided a computer-readable storage medium having instructions stored therein, wherein the instructions, when executed by a processor, cause the processor to perform any one of the vehicle communication methods as described above.

According to the vehicle communication method and terminal, the vehicle, and the computer-readable storage medium of some embodiments of the disclosure, a reliable communication link may be established between the vehicle end and the mobile end, thereby ensuring the security of signals transmitted therebetween.

### Brief Description of the Drawings

The above and other objectives and advantages of the disclosure will be more thorough and clearer from the following detailed description in conjunction with the drawings, where the same or similar elements are represented by the same reference numerals.
FIG. 1 shows a vehicle communication method according to an embodiment of the disclosure;
FIG. 2 shows a vehicle communication method according to an embodiment of the disclosure;
FIG. 3 shows a vehicle communication terminal according to an embodiment of the disclosure;
FIG. 4 shows a vehicle communication terminal according to an embodiment of the disclosure;
FIG. 5 shows a mobile end according to an embodiment of the disclosure; and
FIG. 6 shows a vehicle communication system and operations thereof according to an embodiment of the disclosure.

### Detailed Description of Embodiments

For brevity and illustrative purposes, various embodiments will now be described in detail with reference to the drawings, which are provided as illustrative examples of the disclosure. However, a person skilled in the art would easily realize that various embodiments disclosed herein may be equivalently applied or directed to any vehicle communication methods and terminals, vehicles, and computer-readable storage media, and it is evident that various modifications and changes may be made thereto without departing from the broad spirit and scope of the disclosure.

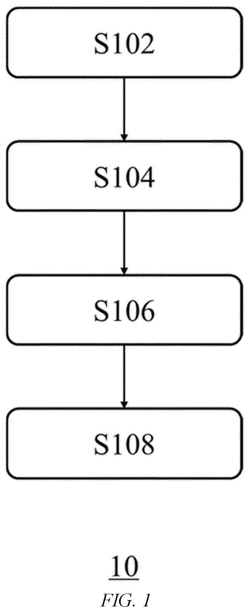

According to an aspect of the disclosure, a vehicle communication method is provided. As shown in FIG. 1, the vehicle communication method 10 (hereinafter referred to as method 10) includes the following steps performed by a vehicle end: in step S102, generating a seed key and presenting a graphic code for the seed key; in step S104, generating a session key using a key generation algorithm based on the seed key and session information generated according to predetermined rule(s); in step S106, encrypting session content by using the session key to generate encrypted session content; and in step S108, sending the encrypted session content and the session information. The above steps of the method 10 enable sharing of the seed key between the vehicle end and the mobile end, and the decryption of the seed key using the password ensures that there is no data leakage even if it is intercepted halfway. The seed key shared between the two ends can be used for subsequent encrypted communication, thus ensuring the reliability of data exchanged between the vehicle end and the mobile end. The specific operations of the method 10 in the above steps are explained in detail below.

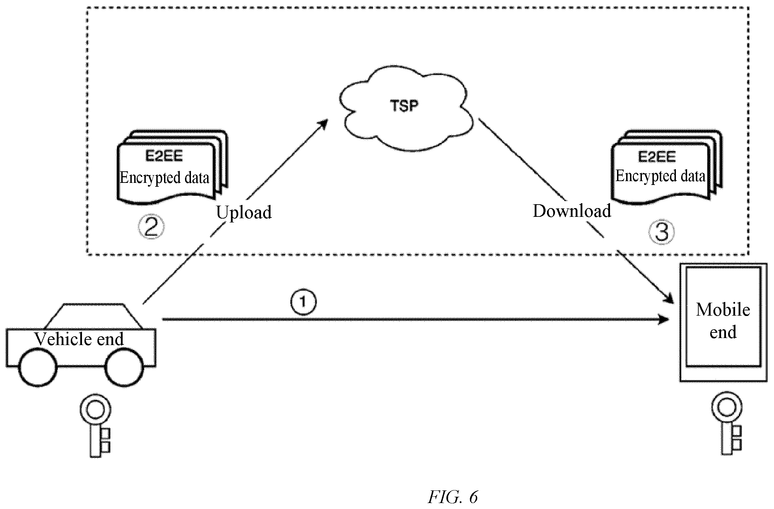

For the sake of clarity, the method 10 will be described in details with reference to the vehicle communication system shown in FIG. 6. As shown in FIG. 6, the vehicle communication system includes a vehicle end, a mobile end, a telematics service provider (TSP), etc. Some embodiments of end-to-end encrypted (E2EE) communication using a session key are described below, where data transmitted between a sender and a recipient (including an intermediate recipient), is E2EE encrypted data. The following operations will be performed between the above ends. The sequence numbers of the following operations correspond to the serial numbers shown in the figure.
(1) Two-dimensional code scanning. FIG. 6 shows an example end-to-end encryption scheme for Internet of Vehicles privacy protection in offline scenarios, where a seed key is shared by scanning a two-dimensional code before an offline session is established, the seed key being the basis for subsequent key rotation for the end-to-end encrypted session. In addition to the seed key information, the two-dimensional code may further contain identity-related information of the vehicle end (e.g., a vehicle identification code of the vehicle end), etc. These information can be protected by the password. The mobile end needs to enter the password to decode and obtain the seed key and the identity-related information of the vehicle end after scanning the code.
(2) Offline data uploading (to a server). In an offline session scenario, a session requester (the vehicle end or the mobile end) encrypts session content by using a session key to obtain encrypted session content, and then packages and sends the encrypted session content and the session information to a cloud TSP.
(3) Offline data downloading (from the server). In the offline session scenario, a session recipient (the mobile end or the vehicle end) downloads, via the cloud, the packaged offline data, including: the encrypted session content and the session information. Then, a session key for an offline session can be generated based on the session information (that is received together with the encrypted session content) and the seed key (that has been locally stored) using a key generation algorithm. Subsequently, the encrypted session content is decrypted by using the session key to generate session content.

The details above describe the sending of data from the vehicle end to the mobile end. The sending of data from the mobile end to the vehicle end can be similarly performed according to descriptions above. It should be understood that FIG. 6 and the above description are intended to provide an adequate but not necessarily complete solution, such that the reader has a thorough understanding of the operations of the disclosure. However, this solution is not intended to limit other embodiments.

Returning to FIG. 1, instead of describing the communication system as a whole, the method 10 will be described below with a focus on describing the performance of the communication method as disclosed herein from the perspective of the vehicle end. In step S 102 of the method 10, the seed key is generated and the graphic code for the seed key is presented. Information carried in the graphic code can be encrypted with the password, and the graphic code can be read by a mobile end that communicates with the vehicle end. The seed key generated in step S102 can then be used to encrypt the information through, for example, symmetric encryption in subsequent processes. Then, the recipient (the mobile end) of the seed key can extract, by entering the password, the seed key from the information carried in the graphic code. In some examples, the graphic code may be a two-dimensional code. In some other examples, the graphic code may be other graphic codes, such as a bar code, that can be recognized and read by a digital device. In some embodiments of the disclosure, the information carried in the graphic code further includes a vehicle identification code of the vehicle end, etc.

In step S104 of the method 10, the session key is generated using the key generation algorithm based on the seed key and the session information generated according to the predetermined rule(s). In some embodiments of the disclosure, the session information includes at least one of the following: timestamp(s) and random number(s). The key generation algorithm used to generate the session key for symmetric encryption based on random session information and seed key can be conventional symmetric algorithms, which will not be described in detail herein. The predetermined rule(s) as disclosed herein may include, for example, capturing current time to generate timestamp data, etc.

In step S106 of the method 10, the session key is used to encrypt the session content and generate the encrypted session content. The session content encrypted with the session key has enhanced security, and will less likely result in data leakage even if it is intercepted halfway. In addition, because the session information is constantly updated, the session key generated thereby is also constantly updated, which makes it more difficult for a hacker to decrypt information in a brute-force attack.

In step S108 of the method 10, the encrypted session content and the session information are sent (via a transit server) to the mobile end.

In this way, the method 10 as described herein allows offline session content to be encrypted through symmetric encryption, thereby ensuring the communication security. Due to a large data volume of the session content, encrypting the session content by symmetric encryption with real-time key rotations achieves a balance between security and efficiency.

In some embodiments of the disclosure, as described above, the method 10 can be used for the transmission of offline data, such as video data pushed from the vehicle end to the mobile end, and calendar data synchronized between the vehicle end and the mobile end, among others, as the content of the session.

The steps above are described from the perspective when the vehicle end is a connection initiator. Similar to the steps as described above, the vehicle end may also be an intended recipient of a session. Specifically, the method 10 may further include the following steps (not shown in the figures): receiving encrypted session content (referred to as second encrypted session content to be distinguishable from the descriptions above) and session information (referred to as second session information to be distinguishable from the descriptions above) from the mobile end, where the second session information is generated by the mobile end according to predetermined rule(s); generating a session key (referred to as a second session key to distinguish one from another) using a key generation algorithm based on the seed key (that has been stored) and the second session information (that is received together with the second encrypted session content); and decrypting the second encrypted session content by using the second session key to obtain second session content.

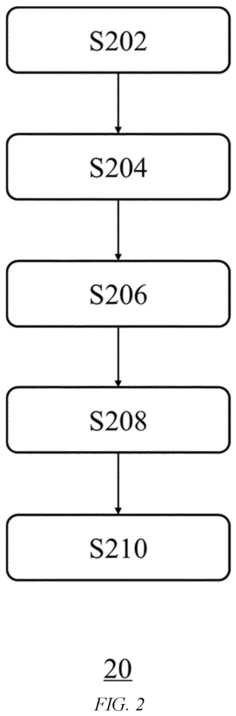

According to another aspect of the disclosure, a vehicle communication method is provided. As shown in FIG. 2, the vehicle communication method 20 (hereinafter referred to as the method 20) includes the following steps performed by a mobile end: in step S202, reading a graphic code presented by a vehicle end in communication with the mobile end; in step S204, decrypting, by using a password, information carried in the graphic code, to obtain a seed key; in step S206, receiving encrypted session content and session information from the vehicle end, where the session information is generated by the vehicle end according to predetermined rule(s); in step S208, generating a session key based on the seed key and the session information using a key generation algorithm; and in step S210, decrypting the encrypted session content by using the session key, to obtain session content.

The steps above are described from the perspective when the mobile end is an intended recipient of a session. Similar to the steps as described above, the mobile end may also be a session initiator. Specifically, the method 20 may further include the following steps (not shown in the figures): generating a session key (referred to as a second session key to be distinguishable from the descriptions above) using a key generation algorithm based on the seed key and session information generated according to predetermined rule(s) (referred to as second session information to be distinguishable from the descriptions above); encrypting session content (referred to as second session content to be distinguishable from the descriptions above) by using the second session key to generate encrypted session content (referred to as second encrypted session content to be distinguishable from the descriptions above); and sending the second encrypted session content and the second session information.

It should be understood that except in the case of code scanning (requiring the two-dimensional code to be presented by the vehicle end and the two-dimensional code to be scanned by the mobile end), the vehicle end and the mobile end constitute a sender/recipient or a recipient/sender pair. Processes performed by the vehicle end as a sender can be equivalent or similar to the processes performed by the mobile end when the mobile end serves as a sender. Likewise, processes performed by the vehicle end as a recipient can be equivalent or similar to the processes performed by the mobile end when the mobile end serves as a recipient.

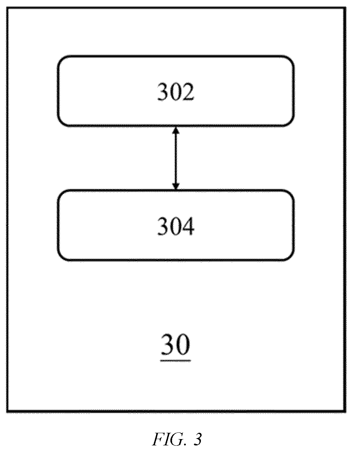

According to another aspect of the disclosure, a vehicle communication terminal is provided. As shown in FIG. 3, the vehicle communication terminal 30 (hereinafter referred to as the terminal 30) includes a memory 302 and a processor 304. The processor 304 may read data from the memory 302 and write data into the memory 302. The memory 302 may store instructions, and the processor 304 may execute the instructions stored in the memory 302 to cause any of the vehicle communication methods as described above to be performed.

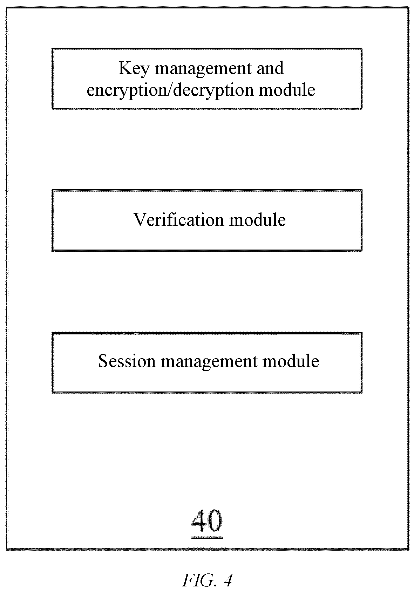

According to another aspect of the disclosure, a vehicle communication terminal is provided. As shown in FIG. 4, the vehicle communication terminal 40 (hereinafter referred to as the terminal 40) includes a key management and encryption/decryption module, a verification module, and a session management module.

The key management and encryption/decryption module of the terminal 40 may be configured to generate a seed key. The verification module of the terminal 40 may be configured to present a graphic code for the seed key. Information carried in the graphic code is encrypted with a password, for reading by a mobile end in communication with a vehicle end. In some examples, the graphic code may be a two-dimensional code. In some other examples, the graphic code may be other graphic codes, such as a bar code, that can be recognized and read by a digital device. In addition, the information carried in the graphic code further includes a vehicle identification code of the vehicle end. Specifically, the verification module integrates two functions, namely, generation and presentation of the two-dimensional code, with the two-dimensional code containing information such as the seed key (the seed key being derived from a master key) and vehicle-end identity information. The information is encoded, and the generated two-dimensional code is then encrypted with the password. Random information can be added when encoding the information into the two-dimensional code to ensure that a different two-dimensional code is generated each time, thereby preventing the information carried in the two-dimensional code from being attacked by cryptanalysis.

The session management module of the terminal 40 may generate session information according to predetermined rule(s). In some embodiments of the disclosure, the session information includes at least one of the following: timestamp(s) and random number(s). Specifically, the session management module may be configured for offline session management and real-time session management. The session management module manages session information for offline session(s) and real-time session(s), and the session information includes vehicle identity information of the vehicle end, mobile-end identity information, the timestamps, the random numbers, etc. The session information is synchronized between the two ends through secure encrypted communication channels. The two ends can generate an offline session key based on the session information and the seed key using a key generation algorithm for subsequent end-to-end data encrypted transmission.

In addition, the key management and encryption/decryption module of the terminal 40 is further configured to generate a session key based on the seed key and the session information using a key generation algorithm, encrypt session content by using the session key to generate encrypted session content, and send the encrypted session content and the session information.

Specifically, the key management and encryption/decryption module is further configured for key management of the master key, the seed key, the session key, etc. that are involved in end-to-end encryption, encryption/decryption, as well as key derivation, among other functions. The master key is generated by an offline session initiator, the seed key is derived from the master key and shared with an offline session recipient through code scanning, and the session key is used for end-to-end data encrypted transmission in offline and real-time session scenarios. The encryption/decryption function provides an encryption/decryption interface, and a key generation algorithm is used to generate the session key. The key generation algorithm can use the seed key for key derivation to generate a one-time session key using encryption techniques such as rotation and substitution based on application scenarios and time factors. The algorithm derives a one-time symmetric key, a one-time initialization vector, and a key digest based on the time of an event. The one-time symmetric key and the one-time initialization vector are used for data encryption, and the key digest is used for key verification.

In addition, the terminal 40 may also serve as the intended recipient of the session. In this case, the key management and encryption/decryption module is further configured to: receive second encrypted session content and second session information from the mobile end, where the second session information is generated by the mobile end according to predetermined rule(s); generate a second session key based on the seed key and the second session information using a key generation algorithm; and decrypt the second encrypted session content by using the second session key to obtain second session content.

In some embodiments of the disclosure, the session content includes at least one of the following: video data pushed to the mobile end and synchronized calendar data.

Furthermore, the terminal 40 may further include a hardware security module (not shown in the figures). This module may be an abstraction layer of an underlying hardware security module (HSM) of the vehicle end, and is used for providing key generation and management and data encryption/decryption capabilities.

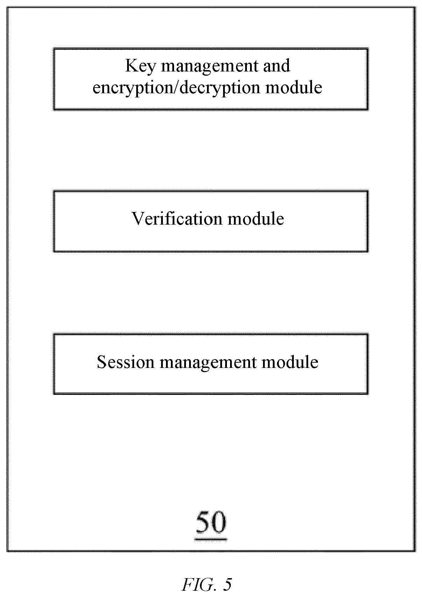

According to another aspect of the disclosure, a mobile end for vehicle communication is provided. As shown in FIG. 5, the mobile end 50 includes a key management and encryption/decryption module, a verification module, and a session management module. Here, the key management and encryption/decryption module and session management module of the mobile end 50 may have the same functions as the corresponding modules of the terminal 40.

The verification module of the mobile end 50 can read a graphic code presented by the vehicle end in communication with the mobile end. The verification module of the mobile end 50 integrates a two-dimensional code scanning function, and the mobile end scans the two-dimensional code for information of the vehicle end and can decrypt the information by using an encrypted password, to obtain a seed key, and vehicle identity information of the vehicle end, timestamps, signatures, and other information.

The key management and encryption/decryption module of the mobile end 50 may decrypt, by using a password, information carried in the graphic code, to obtain the seed key. The session management module of the mobile end 50 may receive encrypted session content and session information from the vehicle end. The key management and encryption/decryption module is further configured to generate a session key based on the seed key and the session information using a key generation algorithm, and decrypt the encrypted session content by using the session key to obtain session content.

In addition, the mobile end 50 may also serve as a session initiator. In this case, the key management and encryption/decryption module is further configured to: generate a second session key using a key generation algorithm based on the seed key and second session information generated according to predetermined rule(s); encrypt second session content by using the second session key to generate second encrypted session content; and send the second encrypted session content and the second session information.

Similarly, Likewise, the mobile end 50 may further include a hardware security module (not shown in the figures). This module may be an abstraction layer of an underlying hardware security module (HSM) of the vehicle end, and is used for providing key generation and management and data encryption/decryption capabilities.

According to another aspect of the disclosure, a vehicle is provided. The vehicle includes any one of the vehicle communication terminals as described above. The disclosure does not limit the layout of the vehicle (for example, a wheeled vehicle, a tracked vehicle, etc.), nor does it limit the driving force of the vehicle (for example, electric motor-driven vehicles, gasoline engine-driven vehicles, etc.), and the vehicle in the disclosure covers various vehicles currently known in the field as well as vehicles to be developed in the future.

According to another aspect of the disclosure, there is provided a computer-readable storage medium having instructions stored therein, where the instructions, when executed by a processor, cause the processor to perform any one of the vehicle communication methods as described above. The computer-readable medium in the disclosure includes various types of computer storage media, and may be any usable medium accessible to a general-purpose or special-purpose computer. For example, the computer-readable medium may include a RAM, a ROM, an EPROM, an EEPROM, a register, a hard disk, a removable hard disk, a CD-ROM or another optical memory, a magnetic disk memory or another magnetic storage device, or any other transitory or non-transitory media that can carry or store expected program code having an instruction or data structure form and be accessible to the general-purpose or special-purpose computer or a general-purpose or special-purpose processor. Data is usually copied magnetically in a disk used herein, while data is usually copied optically by using lasers in a disc. A combination thereof shall also fall within the scope of protection of the computer-readable media. An exemplary storage medium is coupled to a processor, so that the processor can read information from and write information to the storage medium. Alternatively, the storage medium may be integrated into the processor. The processor and the storage medium may reside in an application-specific integrated circuit (ASIC). The ASIC may reside in a user terminal. Alternatively, the processor and the storage medium may reside as discrete assemblies in a user terminal.

The foregoing descriptions are merely the implementations of the disclosure, but are not intended to limit the scope of protection of the disclosure. Any feasible variation or replacement conceived by a person skilled in the art within the technical scope disclosed in the disclosure shall fall within the scope of protection of the disclosure. Without conflicts, the implementations of the disclosure and features in the implementations may also be combined with each other. The scope of protection of the disclosure shall be subject to recitations of the claims.

## Claims

1. A vehicle communication method, **characterized by** comprising the following steps performed by a vehicle end:
generating a seed key and presenting a graphic code for the seed key, wherein information carried in the graphic code is encrypted with a password, and the graphic code is read by a mobile end in communication with the vehicle end;
generating a session key using a key generation algorithm based on the seed key and session information generated according to predetermined rule(s);
encrypting session content by using the session key to generate encrypted session content; and
sending the encrypted session content and the session information.

2. The method according to claim 1, **characterized in that** the graphic code is a two-dimensional code.

3. The method according to claim 1, **characterized in that** the information carried in the graphic code further comprises a vehicle identification code of the vehicle end.

4. The method according to claim 1, **characterized in that** the session information comprises at least one of the following: timestamp(s) and random number(s).

5. The method according to claim 1, **characterized in that** the session content comprises at least one of the following: video data pushed to the mobile end and synchronized calendar data.

6. The method according to claim 1, **characterized by** further comprising:
receiving second encrypted session content and second session information from the mobile end, wherein the second session information is generated by the mobile end according to predetermined rule(s);
generating a second session key based on the seed key and the second session information using a key generation algorithm; and
decrypting the second encrypted session content by using the second session key to obtain second session content.

7. A vehicle communication method, **characterized by** comprising the following steps performed by a mobile end:
reading a graphic code presented by a vehicle end in communication with the mobile end;
decrypting, by using a password, information carried in the graphic code to obtain a seed key;
receiving encrypted session content and session information from the vehicle end, wherein the session information is generated by the vehicle end according to predetermined rule(s);
generating a session key based on the seed key and the session information using a key generation algorithm; and
decrypting the encrypted session content by using the session key to obtain session content.

8. The method according to claim 7, **characterized by** further comprising:
generating a second session key using a key generation algorithm based on the seed key and second session information generated according to predetermined rule(s);
encrypting second session content by using the second session key to generate second encrypted session content; and
sending the second encrypted session content and the second session information.

9. A vehicle communication terminal, **characterized by** comprising:
a key management and encryption/decryption module configured to generate a seed key;
a verification module configured to present a graphic code for the seed key, wherein information carried in the graphic code is encrypted with a password, for reading by a mobile end in communication with a vehicle end; and
a session management module configured to generate session information according to predetermined rule(s), wherein
the key management and encryption/decryption module is further configured to generate a session key based on the seed key and the session information using a key generation algorithm, encrypt session content by the session key to generate encrypted session content, and send the encrypted session content and the session information.

10. The terminal according to claim 9, **characterized in that** the graphic code is a two-dimensional code.
